(19) Europäisches Patentamt
European Patent Office
Office européen des brevets

(11) **EP 1 292 785 B1**

(12) **EUROPEAN PATENT SPECIFICATION**

(45) Date of publication and mention
of the grant of the patent:
**08.08.2007 Bulletin 2007/32**

(51) Int Cl.:
**F16J 15/08** (2006.01)        **F16L 23/20** (2006.01)

(86) International application number:
**PCT/GB2001/002796**

(21) Application number: **01940837.6**

(22) Date of filing: **22.06.2001**

(87) International publication number:
**WO 2001/098690 (27.12.2001 Gazette 2001/52)**

(54) **DOUBLE METAL SEAL FOR FLANGED CONNECTIONS**

DOPPELMETALLDICHTUNG FÜR FLANSCHVERBINDUNGEN

JOINT METALLIQUE DOUBLE POUR RACCORDEMENTS A BRIDES

(84) Designated Contracting States:
**DE FR IT**

(30) Priority: **22.06.2000 GB 0015180**

(43) Date of publication of application:
**19.03.2003 Bulletin 2003/12**

(73) Proprietor: **Axtech Limited
Arbroath,
Angus DD11 3LH (GB)**

(72) Inventor: **SHARP, Allan
Arbroath,
Angus DD11 3LH (GB)**

(74) Representative: **Brown, James Douglas
Murgitroyd & Company
Scotland House
165-169 Scotland Street
Glasgow G5 8PL (GB)**

(56) References cited:
**FR-A- 1 259 587        US-A- 2 291 709
US-A- 3 404 902        US-A- 4 410 186**

## Description

FIELD OF THE INVENTION

This invention relates in general to pressure containment equipment and in particular to the highpressure clamp hub and flange connections widely employed in the oil, gas and petrochemical industries.

DESCRIPTION OF THE PRIOR ART

There are several variants of metal to metal seals (see e.g. US-A-2 291 709), the effectiveness of which is dependent upon the degree to which continuous mating of the sealing surfaces is accomplished. The seal is achieved by a combination of:-

i) making one material relatively soft, normally the ring gasket, such that it deforms under energising load to the surface of the harder material, normally the hub; and

ii) making the sealing element flex under preload in such a manner that the interference between hub and seal element produces a sealing contact face-to-face further enhanced by the action of the pressure of the fluid being retained.

Metal-to-metal sealing ring gaskets are mainly type (i) seals whilst type (ii) seals are typified by the renowned Grayloc® seal and certain ring gaskets. For all seals, it is essential that the contact surfaces be in good condition.
It would be advantageous to have two fully testable metal-to-metal seals in place in a connection for retention of pressurised fluids. In order to be a true double barrier, each seal must demonstrate a full sealing function against pressure originating from the bore. However the outermost seal must be pressure-tested from within and this means that the innermost seal shall be pressurised from behind.
The innermost seal must therefore be a fully bi-directional seal or have pressure support in the bore i.e. bore pressurised to balance the test pressure between the two seals. Pressure-balancing the innermost seal by pressurising the bore can be expensive and time-consuming. It can also be dangerous as it would normally require large volumes of fluid under pressure. Furthermore, it would be advantageous to be able to ascertain whether there is pressurised fluid still being retained within the bore prior to disconnection and to ensure that when such pressure manifests itself, it could still be retained even after initial separation of the hubs/flanges of the connection.

BRIEF DESCRIPTION OF THE DRAWINGS

Fig. 1 depicts a gasket and flange with typical annotation;
Fig. 2 depicts a seal and hubs in accordance with the present invention prior to mechanical make-up;
Fig. 3 shows a partial section of the hub engaging the seal of Fig. 2 to a magnified scale;
Fig. 4 depicts the hubs of Fig. 2 made-up face-to-face with a seal fully engaged; and
Fig. 5 depicts a variant of seal gasket in accordance with the present invention with an elastomeric or non-metallic element at the inner seal faces.

DETAILED DESCRIPTION OF THE PREFERRED EMBODIMENTS

The type of seal to be employed in any pressure-containing connection is determined after due consideration of pressure, thermal limits, legislative requirements and customer practice and preference. Metal-to-metal seals function by a combination of preload and pressure-assistance. After the hubs within which the seal is located are mechanically made-up by bolting or clamping to full required preload, the seal would be pressure-tested to verify both the mechanical integrity of the connector and the effectiveness of the seal.
For gasket types such as ring gaskets approved by the American Petroleum Institute (API), any reduction in seal-hub contact stress below an empirical multiple of the pressure of the retained fluid would result in unacceptable leakage. Gaskets have been incorporated into national design standards such as ASME III and VIII (U.S.A.) and BS 5500 (UK).
Graph 1 shows some characteristics typical of gaskets under load. As pre-load is applied, the gasket follows broken line O-A which is non-recoverable loading. During this phase, the gasket is forced to conform to the profile of the sealing face of the hub, filling any irregularities and surface asperities. Point A is the minimum load on the gasket that will provide an acceptable seal and is known as the gasket seating stress designated 'y' in applicable BS and ASME Codes.

**Graph 1 – Make-up characteristics of metal gaskets**

Section A - C is the useful sealing range of the gasket with C being the point at which some structural breakdown of the sealing element occurs. When the connection is made up on assembly stress, B will be imposed on the gasket. As internal pressure builds up, the gasket stress will reduce. Should this load fall below an empirical multiple of the retained fluid pressure then leakage occurs. This multiple, designated 'm' in industry Codes, is dependent upon the type of gasket and may be found in tabulated reference ASME VIII Section 1, Boiler and Pressure Vessel Code.
As all metal - metal seals leak to some extent, the values of 'm' and 'y' are those known from experience to give acceptable leakage rates.
Two criteria have been established for gasket design in BS 5500:

1. Preload must be sufficient to ensure that the gasket seating load is attained; and
2. Preload must be sufficient to hold internal pressure end load, plus minimum seal contact load.

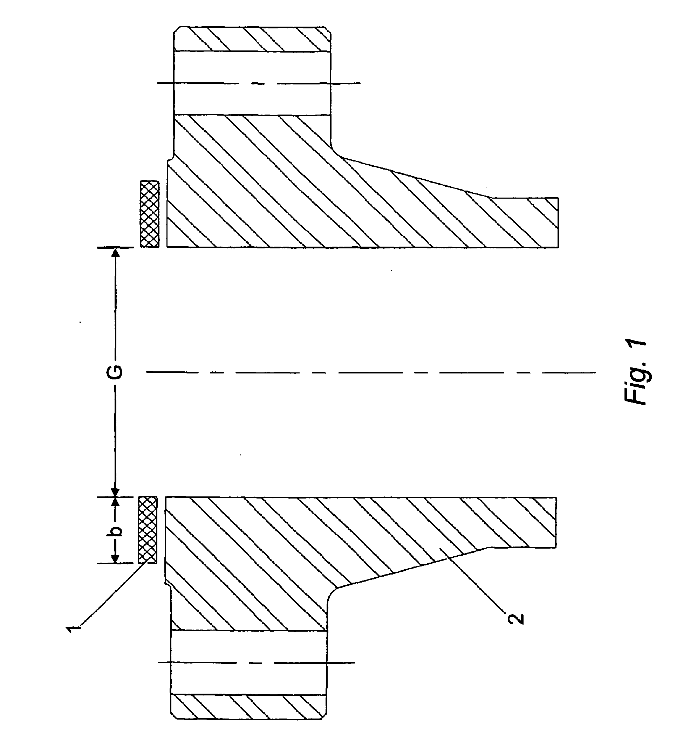

Referring to Figure 1 - Flange and Seal Diagram which shows a gasket 1 on the point of being made-up to a flange 2 (mating flange not shown for brevity), the equations for determining minimum preload to meet provision 1 is:

$$W_1 \approx \pi \ b \ G \ y \qquad\qquad (1)$$

where b is the effective gasket width and G is the effective gasket sealing diameter.
Provision (2) is to ensure that once test pressure $P_{test}$ is applied to the joint, there is enough preload remaining to hold the sealing interface to a contact stress above the threshold value to effect a seal. The pertinent equation is:

$$W_2 = \pi\ G^2\ P_{test}\ /4\ +\ 2\ \pi\ G\ b\ m\ P_{test} \qquad (2)$$

The first part of the above equation is the pressure end load which, of course, must be resisted by the pre-load. The second part is the minimum sealing load. There is a factor of 2 included over and above factor 'm'. This is because effective gasket sealing width is an empirical concept, based upon the supposition that the hub pivots about the outer edge of the gasket and it is this outer area which forms the seal width.

Preload applied to any joint will be at least the greater of equations (1) and (2). Modern tools such as Finite Element Analysis (FEA) should be employed where possible to assess the effects on seal loading due to bending moments.

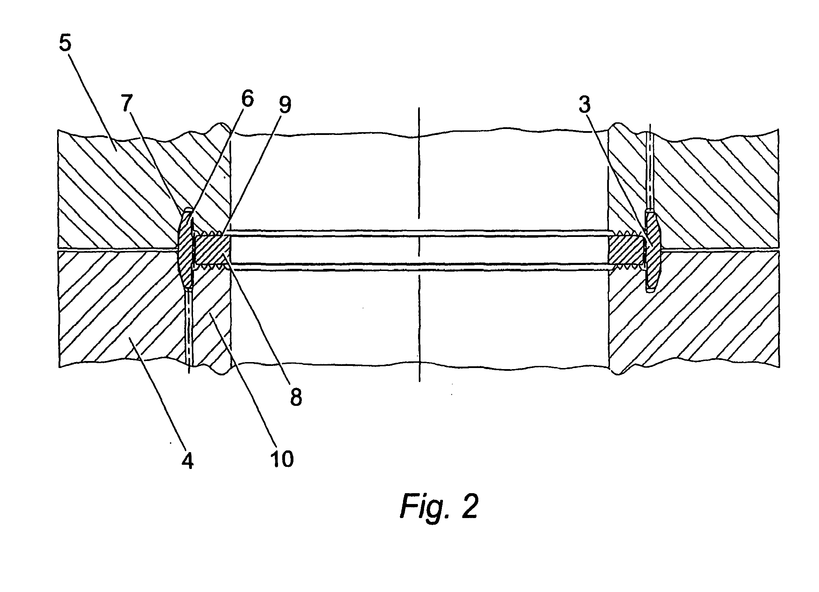

Refer now to Figure 2 which shows the seal or ring gasket 3 of the invention landed in a profiled hub 4 with the mating hub 5 ready to be connected. The gasket 3 has an outer element 6, similar to that of the classic pressure-energised seal as exemplified by the Grayloc®, which shall provide an outer metal-to-metal seal of the pressure-energised type as it is energised by, and set to seal against, a smooth, tapered surface 7 on each hub. The rib of the gasket 8 shall be used to form the inner seal.

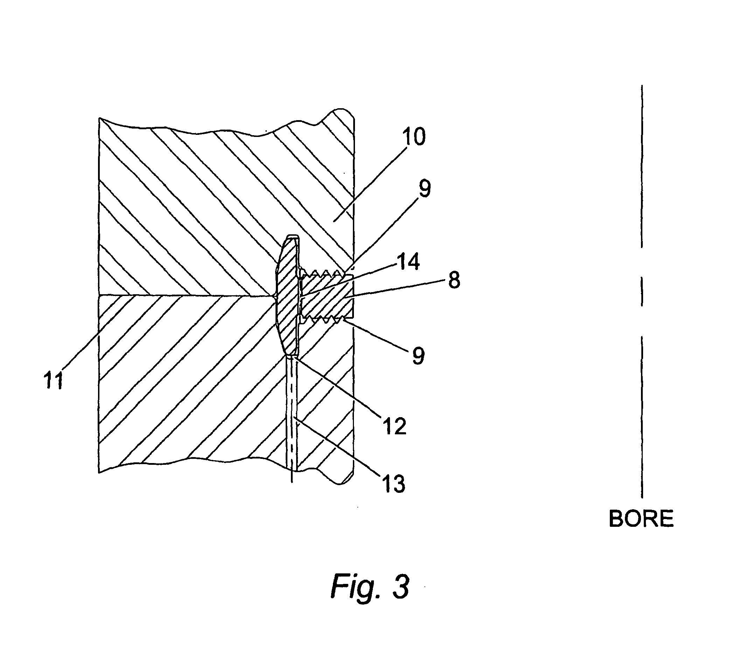

Figure 3 shows the hubs 4,5 fully mated and a resultant double metal-to-metal seal system. The hubs 4,5 have a series of concentric toothed profiles termed nibs 9 directly opposite the rib 8 of the gasket 3. The hubs 4,5 have a material yield strength preferably approximately 2.5 times greater than that of the gasket 3 in order that the nibs 9 shall embed themselves into the rib 8 of the gasket 3.

Referring to Graph 2 which shows the normal stress versus embedment depth of a steel wedge of 520 N/mm$^2$ (75 000 psi) yield strength being driven into a steel plate of 210 N/mm$^2$ (30 000 psi) yield strength, it is seen that an embedment depth of 0.75mm (0.030 in) can be attained at which point the contact stress reaches the yield strength of the wedge. Any attempt to drive the wedge further into the plate would cause the wedge to yield and plastically deform.

Graph 2 - Normal Stress against Embedment Depth

It is preferable that the nibs 9 do not undergo the permanent deformation which would occur were the normal contact stress between the rib 8 of the gasket 3 and each of the hubs 4,5 to exceed the yield stress of the hub material on which the nibs are machined. This is to ensure full repeatability of embedment geometry and make-up conditions. However, if the nibs 9 were to be subject to contact stresses in excess of their material yield point, the nib material would work-harden locally which would not be detrimental to the repeatability of sealing action provided that the geometry of the nibs 9 does not change beyond preferred limits.

It is further preferable that the outer element 6 of the gasket 3 make contact with its mating surface 7 on the hubs 4,5 before the rib 8 touches the nibs, both as the gasket 3 is placed in one hub 4, and as the other hub 5 is mated with the first hub 4 and the gasket 3. This ensures that the gasket 3 shall be centralised in the assembly of the connection. It is anticipated that the tapered surface 7 within the hub profile on which the outer element 6 of the gasket 3 engages and is compressed as hubs 4,5 are subjected to progressive mechanical preloading need not necessarily be the ultimate sealing face of the outer seal; the sealing face could be a parallel bore or a reduced taper sited immediately behind the energising tapered surface 7.

The nibs 9 have a section which is preferably symmetrical with a flat contact face of a width preferably circa 0.1mm to 0.2mm and preferably of an included angle of 60-80°. The quantity of nibs is dependent upon the application but should preferably be 3-4 because, whilst it is preferable that the local contact stresses not exceed the yield strength of the nib/hub material, a compressive stress in the axial direction should be produced in the drive rib 10 preferably of 30-60% of the hub/nib yield strength. This compressive axial stress further imparts compressive radial and hoop stresses to the seal rib 8 and the drive rib 10 through Poisson's effect. The use of one nib only combined with an inner elastomeric or non-metallic seal is an option.

The hubs 4,5 are preferably symmetrical and sized such that when the nibs 9 are achieving the preferred embedment into the seal rib 8 whereby the resulting contact stress of nib to seal rib is approaching the value of the nib/hub yield stress, the hubs 4,5 make face-to-face contact and all further preload goes through the hub-to-hub contact face 11. This ensures that there is no excessive contact stress between nibs 9 and gasket rib 8 and that bending loads are accommodated on the hubs 4,5. The embedment distance for a given seal material can be determined from its own specific, empirical graph of contact stress versus embedment depth.

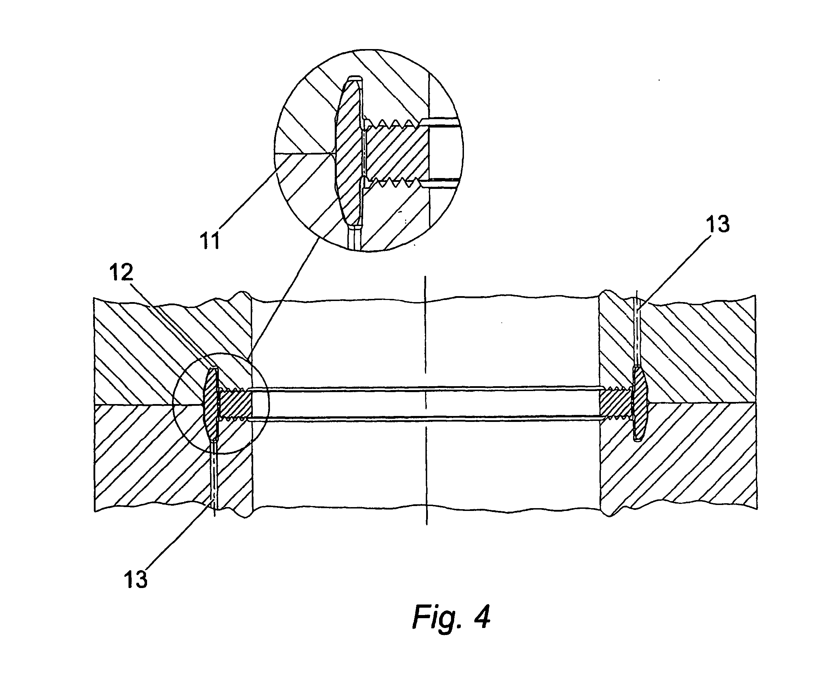

Figure 4 shows the gasket 3 between the mating hubs 4,5. The flexible element 6 is first to be energised. As the hubs 4,5 are progressively tightened, nibs 9 dig into the relatively soft rib 8 effecting a series of seals close to the bore. Nibs 9 are a series of concentric planar teeth whose yield strength is preferably 2-2.5 times that of the ring gasket material.

It is evident that the seal thus created can be tested in the void 12 between the nibs and the outer element through ports 13 linking the external source of test pressure to said void 12. Pressure-balancing holes 14 through a non-sealing diameter on the gasket rib 8 ensure completeness of the test.

An essential feature is that the outer profile 6 should centralise the gasket 3 in a first hub 4 prior to make-up to a second hub 5. Were this not so, the gasket would be eccentric and lock in this position when the nibs bite and grip. The outer profile may then not achieve the required seal.

Said centralisation is achieved by ensuring that the length of the outer seal element is such that, when the gasket 3 is placed in a hub 4, the outer seal element 6 contacts its mating tapered sealing face 7 on the hub 4 before the nibs 9 contact the rib 8 indeed, it is only during the mechanical make-up that the nibs 9 contact, and embed into, the rib 8 of the gasket 3.

The mechanics of forced indentation of a relatively soft material by a harder material in a geometrical form that enhances the indentation requires some explanation even to those experienced in the art of mechanical sealing as it is the founding theory behind the design.

It has been demonstrated that where shear stresses exist on the sealing interface, the most effective seal occurs where the shear stress is the greatest. This does not necessarily coincide with the area of highest normal stress. When nibs are driven into a flat interface by a normal force, stresses will develop as seals are created. There is an "apparent" seal stress which is determined by dividing the seal load by the total area of the seal interface which, in this case, would be the circumferential area between and including the inner and outer nibs. The actual seal stress is the seal load divided by the actual contact area and is readily calculable as the depth to which the nibs are driven will be known from the hub and seal geometries, i.e. the nibs can only be driven up to the point where the hubs attain face-to-face abutment.

Prior studies into the effects of driving a relatively hard metal into work-hardening softer metal revealed the following five regimes of metal to metal sealing:

Regime 1

As the surfaces make contact under light but increasing load, the peaks of the surface profile of the softer material will yield for, although the contact area is small, the actual seal stress is high. Apparent seal stress is half the yield stress of the softer material. Leakage occurs in this regime.

### Regime 2

Normal stress increases bringing more contact. The apparent stress is 2-3 times the yield of the softer material, but the actual contact stress may only be the yield stress of the softer material. This sealing regime leaks but is slowing as the contact force increases.

### Regime 3

The actual stress now exceeds that of yield of the softer material which is on the point of bulk plastic flow.

The amount of work required to produce greater mating rises enormously and is a function of the strain hardening index of the softer material. The actual contact stress is 2-3 times the yield of the softer material as is the actual contact stress due to the far greater contact area. For this regime, a leakage rate of less than $10^{-6}$cc/sec of helium at STP isolated at 100 atmospheres has been reported.

### Regime 4

Further increase in normal stress is causing the softer material to flow in bulk with resultant changes in physical dimensions. Strain hardening of the softer material is increasing its relative hardness to approximate that of the harder material which may itself now be on the point of yielding. Contact stress is 2.5-5 times that of the softer material's yield. There is no leakage.

### Regime 5

The softer material has now strain-hardened to the point where increases in stress cause the harder material to yield. Regimes 4 and 5 result in only marginally better mating between seal surfaces for a proportionally far greater increase in stress.

Clearly regimes 4 and 5 must be avoided as any plastic deformation of the harder surface i.e. the nibs, would have a deleterious effect on the reusability of the hubs. It is the preference to have a minimum yield strength ratio of 2.3:1 for hard and soft surfaces. Where a hub material is of 75 000 psi (517 N mm$^{-2}$) yield strength, then the material of the ring gasket would be around 30 000 psi (207 N mm$^{-2}$).

Control over the development of the normal stresses is derived from an experiment during which a hard wedge of the same profile as the nib was driven into a steel plate of 30 000 psi (207 N mm$^{-2}$) yield strength. The resultant plot of normal contact stress against bite depth is shown in Graph 1. As it is intended not to exceed a normal contact stress of 70,000 psi (483 N mm$^{-2}$) for this particular embodiment, then an indentation of 0.03 inches (0.76mm) per side shall be sized on the assembly of seal and hubs. It has been determined through testing that, when the nibs 9 are spaced within approximately 0.15 inches (4mm) of each other, a "proximity effect" is produced whereby work-hardening effects are apparently increased and the depth of embedment is less than that for singular embedment for a given contact stress level. In effect, the slope of graph 2 is steeper for proximity-affected embedment than for singular embedment, and provides a correction for indentation of nib into gasket.

The development of stresses from the preload during hub make-up is explained hereafter. Consider again figure 2 showing the hubs 4,5 being brought together. The outer element 6 is partially engaged and the nibs 9 are just touching the rib 8. There is still a gap of 1.5mm (0.06in.) to be closed i.e. 0.75mm (0.03 in.) per face.

Figure 4 depicts the faces of the hubs 4,5 as now being in contact with a normal stress at the interface of the rib 8 and nib 9 of 70,000psi (483 Nmm$^{-2}$).

The preload that now exists through the nibs for 5⅛ inch API flanges is:

$$F_{pre} = 70\ 000\ \text{psi} \times \pi \times D \times 4t_{fin}$$

where $t_{fin}$ = 0.05 in (1.25mm) i.e. the width of the embedment per nib in plan view.

$$\mathbf{F_{pre}} = \mathbf{251{,}227} \textbf{ lb-f } \mathbf{(1117 \ kN)}$$

The averaged stress through the section of the drive rib 10 is

$$\mathbf{251{,}227 \ lbf} \ / \ \frac{\underline{\pi} \ (6.1^2 - 5.13^2)}{4} = \mathbf{29{,}379 \ psi}$$

$$\mathbf{1117 \ kN} \ / \ \frac{\underline{\pi} \ (155^2 - 130.3^2)}{4} = \mathbf{201.9 \ N \ mm^{-2}}$$

The stress in that part of the seal profile that carries the nib loading is higher than elsewhere. This stress is mainly plastic at the areas of nib 9 embedment into the rib 8 but averaged elastic stress is established over the section. The latter is recoverable and holds the seal faces i.e. nibs and seal rib in contact at a pressure in excess of the retained fluid pressure.

ASME VIII recommends an 'm' value of 3 for many applications. It should be borne in mind that the ASME Boiler and Pressure Vessel Codes are intended for containment of pressures lower than that for oilfield equipment. A gasket would be destroyed if such loading as ASME indicates were applied and so, for high pressure containment, reduced values of 'm' have been applied successfully.

Preload in a connection in which this invention is employed may be obtained from a Grayloc®-type clamp, or from bolted flanges utilising threaded elements such as bolts, studs and nuts set to those torque values required by design and conditions of operation. Both methods are well-known to engineers expert in the art. The preload calculations hereafter consider the criteria outlined previously where seal seating loads, pressure end loads and loading factors are examined. Loads for the design case where test pressure is 10,000 psi (68.7 Nmm$^{-2}$) are:

$$\mathbf{W_2} = \mathbf{\pi G^2 P_{test}/4} + \mathbf{2\pi G_1 bmP_{test} + 40{,}000 lbf} \ \mathbf{(177{,}959 \ N)}$$

Pressure end load+nib seating load+flexible element preload
where,

G = diameter of first bore seal = 5.316 in (135mm)
$G_1$ = diametral mid-point of nibs = 5.6 in (142.2mm)
b = 0.05 in/nib x 4 nibs = 0.2 in (5.1mm) i.e. $4xt_{fin}$ m = 2

then,

$$\mathbf{W_2 \ (lbf)} = \mathbf{(\frac{\underline{\pi} x5.316^2 x10{,}000}{4}) + (\pi x5.6x0.2x2x10{,}000) + 40{,}000}$$

$$W_2 \ (N) = \frac{(\pi \times 135^2 \times 68.7) + (\pi \times 142.2 \times 5.1 \times 2 \times 68.7) + 177,959}{4}$$

giving,

$$W_2 \ (lbf) = 221,839 + 70,336 + 40,000$$

$$W_2 \ (N) = 986,957 + 309,478 + 176,000$$

$$W_2 = 332,175 \ lbf$$

$$W_2 = 1,461,570 \ N$$

This value of $W_2$ is the calculated minimum value of preload required to maintain a seal at internal pressure of 10,000 psi (68.7 Nmm$^{-2}$) for a contact multiplier 'm' of 2.

Another condition that must be met from consideration of safety and good engineering practice is that preload should be greater than the combined pressure end load and seal engagement load that would act upon the flexible element of the seal in the event that the inner sealing arrangement fails. Taking a sealing diameter of 6.2 inches (157.5 mm) and terming the resultant load as $W_3$ yields:

$$W_3 \ (lbf) = (\pi/4 \ x \ 6.2^2 \ x \ 10,000) + 40,000$$

$$W_3 \ (N) = (\pi/4 \ x \ 157.7^2 \ x \ 68.7) + 177,959$$

Pressure end load flexible element load giving,

$$W_3 = 341,907 \ lbf$$

$$W_3 = 1,504,391 \ N$$

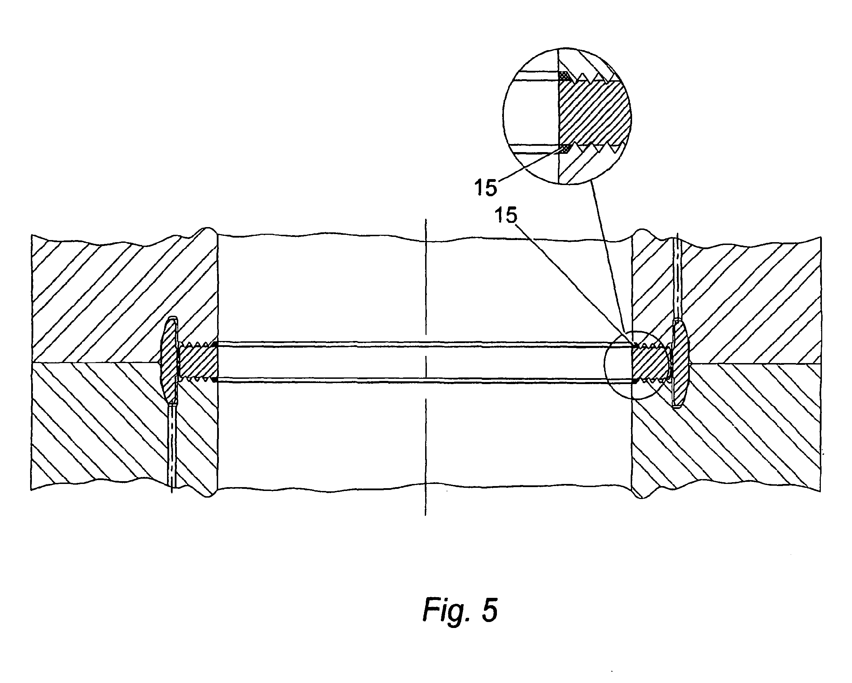

It is further foreseen as depicted on Figure 5 that the immediate junction at the bore to be sealed between the innermost nib and seal interface is a suitable site for a non-metallic element 15 attached preferably by adhesive preferably to the rib 8. There are two junctions per gasket hence two non-metallic elements per gasket. Each non-metallic element should be of an axial thickness slightly greater than the nominal gap which would exist when the hubs 4,5 are fully preloaded. i.e. when the nibs 9 are embedded to pre-designed depth in the rib 8 of the gasket 3. After complete make-up of the hubs 4, 5, each non-metallic element 15 is compressed and may provide seal against the innermost nib embedded in the rib of the metal gasket. There is no nominal gap between the sealing elements behind the non-metallic element 15 and the latter cannot therefore be extruded through any gap as a result of pressure and fail in the manner in which O-rings typically fail. It should be noted that there exist several proprietary or generic compounds available from suppliers of non-metallic seals and gaskets which would suit the purposes described herein.

It is considered that the problem of crevice corrosion often encountered in the oil and gas industry may be eliminated by use of the previously described non-metallic element as the crevice which would exist between two hubs and a gasket is instead occupied by a pre-compressed non-metallic element bounded by the rib of the seal and the nib and face of the hub.

There have been several instances where the bore of pressure-retaining equipment has not been depressurised prior to attempted disconnection of a connector assembly with resultant loss of life and property. As the elements which generate the mechanical preload within the present invention in its clamp or flange configuration are unfastened, the innermost seal relaxes and would permit passage of retained fluids from the bore to the void 12. The outermost seal does not cease functioning until the hubs 4,5 are separated by greater than the combined embedment depth of the nibs 9 into the rib 8 of the gasket 3 thus ensuring that any unreleased pressure within the bore can be retained and shall be detected by pressure-monitoring equipment.

The present invention has advantages over current art. It is seen that the sealing group generated by embedment of the nibs of the two respective hubs into the rib of the seal acts in a bi-directional manner in direct contrast to the outer flexible element of this gasket and of other art which functions in a uni-directional mode. It is therefore evident that the small void between the outer flexible seal element and the inner compressive embedment group may be subject to a pressure test of full rated pressure of the connection immediately after the respective hubs are mechanically set against each other to the requisite preload. This allows the operator to verify the achievement of a dual metal-to-metal seal at each instance of implementation of a mechanical connection without having to prime the entire pressure-containment system or to take measures to isolate internally those elements requiring test. Given that the pressure-containment systems envisaged as suited to use of this invention include systems of pipework, valves, manifolds, Christmas trees and wellheads, the verification of the integrity of the system's pressurised connections prior to full test of the fluid retaining volume of the pressurised system provides a cost-saving step as system blowdown (rapid depressurisation) on seal failure is extremely unlikely, and there is an additional metal-to-metal seal system in place. Furthermore, the void between the metal seals is suited to the siting of pressure-monitoring fittings for unexposed observation of the connection during service.

Owing to the highly corrosive nature of retained fluids, a necessary practice within the oil and gas industry is the overlaying, generally applied by one or more welding processes, of essential sealing areas with Corrosion Resistant Alloys, said alloys being proprietary grades which obtain their desired properties typically from nickel, chromium and molybdenum. Such alloys would be suitable for application to this invention and would preferably be present on the pre-machined hub profiles on both the profile against which the outer flexible element of the gasket seals, and where the nibs shall be produced under the final machining operation. In their as-welded condition, these corrosion-resistant alloys are not necessarily of the requisite hardness prior to the first cycle of embedment in the gasket material. These alloys do, in general, have rapid work-hardening characteristics and would attain the requisite hardness after a deliberate, measured pre-embedment into a softer, sacrificial ring material, said pre-embedment intended to bring the nibs up to the requisite hardness prior to operational use with a seal gasket. The sacrificial ring would be typically of soft iron and the nib profile would preferably be modified to take account of the work-hardening pre-embedment operation.

Such a pre-embedment operation could also be employed on hubs of steels of yield strength less than the preferred ratio of 2-2.5 times that of the seal gasket in order that the local yield strength of the hub material at the nibs be increased by work-hardening to attain the preferred ratio.

Implementation of a variant of this invention which would allow mechanical make-up in a subaqueous environment encounters the central problem that the water which would be present around the sealing elements is effectively incompressible. In the isolated cavities between the nibs, such as would normally be created by embedment into the rib of the gasket, would be generated great local pressures acting against the mechanical setting force thereby rendering establishment of a secure seal particularly difficult. This problem may be countered by the placement during hub manufacture of a more readily compressible elastomeric material into the troughs of the nibs to create a generally flat profile across the area of the nibs. It is evident that, as the nibs would embed into the rib of the seal, the greatly reduced presence of water within the cavities between the nibs and the presence of a more compressible fluid - the elastomeric material - would facilitate the achievement of a functioning seal. The water trapped in the void between the primary seal elements would be vented through one of the test ports.

Modifications and improvements can be made to the embodiments hereinbefore described without departing from the scope of the invention.

**Claims**

1. A double-barrier metal-to-metal seal assembly comprising in combination:-

　　a seal gasket (3) having an outer flexible seal element (6) and an inner flat rib (8); and

a pair of hubs (4,5) each having an internal machined profile with a tapered profile (7) which, when the hubs (4,5) are mechanically set, provides an interference fit against the outer flexible element (6) of the seal gasket (3) so as to provide an outer seal,

**characterised in that** said pair of hubs further comprises an inner profile comprising a plurality of concentric circular nibs (9) machined on the hubs (4,5) which, when the hubs are being mechanically set, progressively embed themselves to a pre-determined depth into the rib (8) of the seal gasket (3) to effect an inner seal, said embedment being limited by the face-to-face abutment of the hubs (4,5) outside the locus of the outer seal (6) during the mechanical imposition of preload.

2.  The double-barrier metal-to-metal seal assembly of claim 1, wherein the metallic material of the hubs (4,5) is harder than that of the ring gasket.

3.  The double barrier metal-to-metal seal assembly of either of claims 1 or 2, wherein the nibs (9) are **characterised by** approximate symmetry and a preferred, included angle of 60-80°.

4.  The double barrier metal-to-metal seal assembly of any preceding claim, wherein the hubs (4,5) comprise an external profile for use as a clamp-actuated connection of the type exemplified by the Grayloc® clamp.

5.  The double barrier metal-to-metal seal assembly of any of claims 1 to 3, wherein the hubs (4,5) comprise a flanged external profile and are mechanically energised and preloaded by threaded elements.

6.  The double barrier metal-to-metal seal assembly of any preceding claim, wherein, to each of the upper and lower faces of the seal gasket (3), is bonded a non-metallic element (15) of an outer diameter which fits tightly within the designed innermost nib embedment, an inner diameter of no less than the bore of the seal gasket (3), and an axial thickness marginally in excess of the gap which would exist between the innermost flat face of the nibbed section of hub (4,5) and the corresponding opposing face of the seal gasket (3) when the hubs are fully preloaded.

7.  The double-barrier metal-to-metal seal assembly of any preceding claims wherein the hubs (4,5) are provided with one or more ports (13) linking the external environment and the void between the outermost nib (9) and the outer seal (6).

8.  The double-barrier metal-to-metal seal assembly of any preceding claim, wherein the seal gasket has one or more ports (14) drilled through the inner flat rib (8) at a position inside the outer flexible element and outside the outermost embedment perimeter of the nibs when the hubs (4,5) are preloaded to the seal gasket (3), said ports (14) providing pressure equalisation through the seal gasket (3) during test and verification of the preloaded hubs and seal.

9.  The double barrier metal-to-metal seal assembly of any preceding claim, wherein the outer element (6) of the seal gasket (3), upon siting the gasket in a first hub (4), makes contact with the tapered profile (7) of the first hub (4) thereby centralising the gasket (3) with respect to the first hub (4) prior to engagement with the second hub (5).

10.  The double barrier metal-to-metal seal assembly of claim 9, wherein the outer element (6) of the seal gasket (3), having been sited in the first hub (4), makes contact with the tapered profile (7) of a second hub (5) as it is brought to the mechanical make-up proximity of the first hub (4) thereby centralising the gasket (3) with respect to both the first hub (4) and the second hub (5).

11.  The double barrier metal-to-metal seal assembly of any preceding claim, wherein the sealing faces of the hubs (4,5) are of a corrosion-resistant alloy applied by one or more welding processes.

12.  The double barrier metal-to-metal seal assembly of any preceding claim wherein the nibs (9) are of the corrosion-resistant alloy of claim 11 and are work-hardened to the requisite hardness level by a deliberate, measured pre-embedment into a sacrificial metal ring prior to operational use.

13.  The double barrier metal-to-metal seal assembly of any of claims 1 to 10 wherein the hubs (4,5) are of material of which the yield strength is less than 2.5 times that of the seal gasket.

14.  The double barrier metal-to-metal seal assembly of and of claims 1 to 10 or claim 13 wherein the nibs (9) are work-hardened to the requisite hardness level by a deliberate, measured pre-embedment into a sacrificial metal ring prior to operational use.

15. The double barrier metal-to-metal seal assembly of any preceding claim, wherein the troughs between the concentric circular nibs (9) are inlaid with an elastomeric material.

**Patentansprüche**

1. **Ein Doppelbarriere-Metalldichtelement, das in Kombination** Folgendes beinhaltet:

    eine Dichtung (3), die ein äußeres flexibles Abdichtungsbauteil (6) und eine innere flache Rippe (8) aufweist; und **ein Paar Naben (4, 5), die jeweils ein internes, maschinell** bearbeitetes Profil mit einem verjüngten Profil (7) aufweisen, das, wenn die Naben (4, 5) mechanisch fixiert werden, eine Presspassung gegen das äußere flexible Bauteil (6) der Dichtung (3) bereitstellt, um eine äußere Abdichtung bereitzustellen, **dadurch gekennzeichnet, dass** das Paar Naben des Weiteren ein inneres Profil beinhaltet, das eine Vielzahl von konzentrischen, kreisförmigen Nasen (9) beinhaltet, die auf den Naben (4, 5) maschinell bearbeitet sind und, wenn die Naben mechanisch fixiert werden, sich progressiv bis zu einer vorbestimmten Tiefe in die Rippe (8) der Dichtung (3) einbetten, um eine innere Abdichtung herbeizuführen, wobei die Einbettung von dem Flächenanstoß der Naben (4, 5) außerhalb des Ortes der äußeren Abdichtung (6) während der mechanischen Auferlegung der Vorlast beschränkt wird.

2. Doppelbarriere-Metalldichtelement gemäß Anspruch 1, wobei das metallische Material der Naben (4, 5) härter als das der Ringdichtung ist.

3. Doppelbarriere-Metalldichtelement gemäß Anspruch 1 oder 2, wobei die Nasen (9) durch eine annähernde Symmetrie und einen bevorzugten eingeschlossenen Winkel von 60-80° **gekennzeichnet** sind.

4. Doppelbarriere-Metalldichtelement gemäß einem der vorhergehenden Ansprüche, wobei die Naben (4, 5) ein externes Profil zur Verwendung als klammerbetätigte Verbindung der durch die Grayloc®-Klammer dargestellten Art beinhalten.

5. Doppelbarriere-Metalldichtelement gemäß einem der Ansprüche 1 bis 3, wobei die Naben (4, 5) ein angeflanschtes externes Profil beinhalten und durch Gewindebauteile mechanisch mit Energie versorgt und vorbelastet werden.

6. Doppelbarriere-Metalldichtelement gemäß einem der vorhergehenden Ansprüche, wobei ein nicht metallisches Bauteil (15) mit einem äußeren Durchmesser, der eng in die innerste Naseneinbettung passt, einem inneren Durchmesser von nicht weniger als der Bohrung der Dichtung (3) und einer axialen Dicke, die die Lücke, die zwischen der innersten flachen Fläche des Nasenteilabschnitts der Nabe (4, 5) und der entsprechenden gegenüberliegenden Fläche der Dichtung (3) bestünde, wenn die Naben voll vorbelastet wären, um ein Geringes übertrifft, an jede der oberen und der unteren Fläche der Dichtung (3) gebunden ist.

7. Doppelbarriere-Metalldichtelement gemäß einem der vorhergehenden Ansprüche, wobei die Naben (4, 5) mit einem **oder mehreren Kanälen (13) versehen sind, die die externe** Umgebung und den Hohlraum zwischen der äußersten Nase (9) und der äußeren Abdichtung (6) verknüpfen.

8. **Doppelbarriere-Metalldichtelement gemäß einem der** vorhergehenden Ansprüche, wobei die Dichtung einen oder mehrere Kanäle (14) aufweist, die an einer Position innerhalb des äußeren flexiblen Bauteils und außerhalb der äußersten Einbettungsumrandung der Nasen, wenn die Naben (4, 5) zur Dichtung (3) vorbelastet sind, durch die innere flache Rippe (8) gebohrt sind, wobei die Kanäle (14) während des Testens und der Verifizierung der vorbelasteten Naben und der Abdichtung einen Druckausgleich durch die Dichtung (3) bereitstellen.

9. **Doppelbarriere-Metalldichtelement gemäß einem der** vorhergehenden Ansprüche, wobei das äußere Bauteil (6) der Dichtung (3) bei Platzierung der Dichtung in einer ersten Nabe (4) den Kontakt mit dem verjüngten Profil (7) der ersten Nabe (4) herstellt, wodurch die Dichtung (3) vor dem Eingriff mit der zweiten Nabe (5) in Bezug auf die erste Nabe (4) zentriert wird.

10. Doppelbarriere-Metalldichtelement gemäß Anspruch 9, wobei das äußere Bauteil (6) der Dichtung (3) nach der Platzierung in der ersten Nabe (4) den Kontakt mit dem verjüngten Profil (7) einer zweiten Nabe (5) herstellt, während sie in die mechanische Aufmachungsnähe der ersten Nabe (4) gebracht wird, wodurch die Dichtung (3) in Bezug auf sowohl die erste Nabe (4) als auch die zweite Nabe (5) zentriert wird.

11. Doppelbarriere-Metalldichtelement gemäß einem der vorhergehenden Ansprüche, wobei die Abdichtflächen der Naben (4, 5) aus einer korrosionsbeständigen Legierung sind, die in einem oder mehreren Schweißprozessen aufgetragen wird.

12. Doppelbarriere-Metalldichtelement gemäß einem der vorhergehenden Ansprüche, wobei die Nasen (9) aus der korrosionsbeständigen Legierung von Anspruch 11 sind und durch eine bewusste, bemessene Voreinbettung in einen Opfermetallring vor dem Betriebseinsatz auf das erforderliche Härteniveau kaltverfestigt sind.

13. Doppelbarriere-Metalldichtelement gemäß einem der Ansprüche 1 bis 10, wobei die Naben (4, 5) aus einem Material sind, dessen praktische Fließgrenze weniger als 2,5-mal die der Dichtung beträgt.

14. Doppelbarriere-Metalldichtelement gemäß einem der Ansprüche 1 bis 10 oder Anspruch 13, wobei die Nasen (9) durch eine bewusste, bemessene Voreinbettung in einen Opfermetallring vor dem Betriebseinsatz auf das erforderliche Härteniveau kaltverfestigt sind.

15. Doppelbarriere-Metalldichtelement gemäß einem der vorhergehenden Ansprüche, wobei die Rinnen zwischen den konzentrischen, kreisförmigen Nasen (9) mit einem elastischen Polymer eingelegt sind.

## Revendications

1. Un assemblage formant joint métal-métal à barrière double comprenant en combinaison :

une garniture d'étanchéité (3) ayant un élément formant joint flexible externe (6) et une nervure plate interne (8) ; et
une paire de moyeux (4, 5) ayant chacun un profil usiné interne avec un profil effilé (7) qui, lorsque les moyeux (4, 5) sont réglés mécaniquement, fournit un ajustage serré contre l'élément flexible externe (6) de la garniture d'étanchéité (3) de sorte à fournir un joint externe, **caractérisé en ce que** ladite paire de moyeux comprend de plus un profil interne comprenant une pluralité d'ergots circulaires concentriques (9) usinés sur les moyeux (4, 5) lesquels, lorsque les moyeux sont réglés mécaniquement, s'encastrent progressivement jusqu'à une profondeur prédéterminée dans la nervure (8) de la garniture d'étanchéité (3) pour effectuer un joint interne, ledit encastrement étant limité par l'aboutement face à face des moyeux (4, 5) à l'extérieur du locus du joint externe (6) au cours de l'imposition mécanique de la précharge.

2. L'assemblage formant joint métal-métal à barrière double de la revendication 1, dans lequel le matériau métallique des moyeux (4, 5) est plus dur que celui de la garniture en anneau.

3. L'assemblage formant joint métal-métal à barrière double de l'une ou de l'autre des revendications 1 ou 2, dans lequel les ergots (9) sont **caractérisés par** une symétrie approximative et un angle inclus préféré de 60 à 80°.

4. L'assemblage formant joint métal-métal à barrière double de n'importe quelle revendication précédente, dans lequel les moyeux (4, 5) comprennent un profil externe destiné à être utilisé comme raccord actionné par élément de serrage du type exemplifié par l'élément de serrage Grayloc®.

5. L'assemblage formant joint métal-métal à barrière double de n'importe lesquelles des revendications 1 à 3, dans lequel les moyeux (4, 5) comprennent un profil externe à flasque et sont excités de façon mécanique et préchargés par des éléments filetés.

6. L'assemblage formant joint métal-métal à barrière double de n'importe quelle revendication précédente, dans lequel, sur chacune des faces supérieure et inférieure de la garniture d'étanchéité (3) est lié un élément non métallique (15) d'un diamètre externe qui s'emboîte de façon serrée au sein de l'encastrement d'ergot le plus interne conçu, un diamètre interne pas inférieur à l'alésage de la garniture d'étanchéité (3), et une épaisseur axiale dépassant de façon marginale l'écart qui existerait entre la face plate la plus interne de la section à ergots du moyeu (4, 5) et la face opposée correspondante de la garniture d'étanchéité (3) lorsque les moyeux sont pleinement préchargés.

**7.** L'assemblage formant joint métal-métal à barrière double de n'importe lesquelles des revendications précédentes dans **lequel les moyeux (4, 5) sont fournis avec un ou plusieurs** orifices (13) liant l'environnement externe et le vide entre l'ergot le plus externe (9) et le joint externe (6).

**8.** L'assemblage formant joint métal-métal à barrière double de n'importe quelle revendication précédente, dans lequel la garniture d'étanchéité a un ou plusieurs orifices (14) pratiqués dans la nervure plate interne (8) à une position à l'intérieur de l'élément flexible externe et à l'extérieur du périmètre d'encastrement le plus externe des ergots lorsque les moyeux (4, 5) sont préchargés sur la garniture d'étanchéité (3), lesdits orifices (14) fournissant l'équilibrage de pression à travers la garniture d'étanchéité (3) au cours du test et de la vérification des moyeux préchargés et du joint.

**9.** L'assemblage formant joint métal-métal à barrière double de n'importe quelle revendication, dans lequel l'élément externe **(6) de la garniture d'étanchéité (3), lors du placement de la** garniture dans un premier moyeu (4), entre en contact avec le profil effilé (7) du premier moyeu (4) centralisant de ce fait la garniture (3) par rapport au premier moyeu (4) avant la mise en prise avec le deuxième moyeu (5).

**10.** L'assemblage formant joint métal-métal à barrière double de la **revendication 9 dans lequel l'élément externe (6) de la garniture d'étanchéité (3), ayant été placé dans le premier** moyeu (4), entre en contact avec le profil effilé (7) d'un deuxième moyeu (5) lorsqu'il est amené à proximité de montage mécanique du premier moyeu (4) centralisant de ce fait la garniture (3) par rapport à la fois au premier moyeu (4) et au deuxième moyeu (5).

**11.** L'assemblage formant joint métal-métal à barrière double de n'importe quelle revendication précédente, dans lequel les faces d'étanchéité des moyeux (4, 5) sont en un alliage résistant à la corrosion appliqué par un ou plusieurs procédés de soudage.

**12.** L'assemblage formant joint métal-métal à barrière double de n'importe quelle revendication précédente dans lequel les ergots (9) sont en l'alliage résistant à la corrosion de la revendication 11 et sont durcis par un travail jusqu'au niveau de dureté requis par un pré-encastrement mesuré délibéré jusque dans un anneau de métal sacrificiel avant l'utilisation fonctionnelle.

**13.** L'assemblage formant joint métal-métal à barrière double de n'importe lesquelles des revendications 1 à 10 dans lequel les moyeux (4, 5) sont de matériau dont la limite d'étirage est inférieure à 2,5 fois celle de la garniture d'étanchéité.

**14.** L'assemblage formant joint métal-métal à barrière double des revendications 1 à 10 ou de la revendication 13 dans lequel les ergots (9) sont durcis par un travail jusqu'au niveau de dureté requis par un pré-encastrement mesuré délibéré jusque dans un anneau de métal sacrificiel avant l'utilisation fonctionnelle.

**15.** L'assemblage formant joint métal-métal à barrière double de n'importe quelle revendication précédente, dans lequel les creux entre les ergots circulaires concentriques (9) sont incrustés d'un matériau élastomérique.

Fig. 1

Fig. 2

EP 1 292 785 B1

BORE

*Fig. 3*

13
12
9
8
14
9
10
11

*Fig. 4*

EP 1 292 785 B1

*Fig. 5*

EP 1 292 785 B1

**EP 1 292 785 B1**

## REFERENCES CITED IN THE DESCRIPTION

### Patent documents cited in the description

- US 2291709 A